# EUROPEAN PATENT APPLICATION

(11) **EP 0 810 807 A2**
(43) Date of publication of application: **03.12.1997**
(21) Application number: 97301810.4
(22) Date of filing: 18.03.1997
(51) Int. Cl.: H04Q 11/04, H04L 12/26

(54) **Method and apparatus for analysing network data**

(30) Priority: 31.05.1996 GB 9611403
(71) Applicant: NORTHERN TELECOM LIMITED, Montreal, Quebec H2Y 3Y4 (CA)
(72) Inventor: Burn-Thornton, Kathryn Elizabeth, Ruislip, Middlesex HA4 7RN (GB)
(74) Representative: Franks, Robert Benjamin

(57) **Abstract**

A network monitoring and diagnosis apparatus comprises a processor (500), data storage device (501, 504), graphical user interface (401), data mining means (505), data visualization means (506), data correlation means (507), and problem solving means. Performance data signals generated periodically by a communications network are collected by a network controller (400). The collected performance data is continuously mined, examining the data for performance parameters which are outside preset limits. Performance data outside preset limits is displayed on a graphical user interface, in a format determined by the visualization means. Performance parameters which are out of limits are correlated with other related parameters, information on which is available from the performance data signals, and patterns of parameter changes are identified by the correlation means. For performance parameters which are outside limits, a problem solving means (508) examines the out of limit performance data and generates suggested solutions to underlying problems resulting in out of limit performance parameters.

## Description

### Field of the Invention

The present invention relates to the field of communications networks, and particularly although not exclusively to methods and apparatus for monitoring, measuring, reconfiguring and analyzing data describing a communications network.

### Background to the Invention

A modern telecommunications network comprises a plurality of network elements in the form of a plurality of node devices linked together by a plurality of link devices. The node devices typically comprise switches, multiplexers, regenerators, and the link devices may comprise optical fiber communications links, twisted wire pairs, wireless links, or coaxial cables. Typically, in a broadband telecommunications network, there will be provided a plurality of switches, transmitters, receivers, and links supplied by a plurality of different manufacturers, operating under different protocol standards, and each generating operational data describing their own operation. Such data is used for the maintenance of the network and for management of traffic flow in the networks^{1,3,6,11}. Communications networks produce large amounts of raw data at regular intervals, describing many different parameters of operation of the network, and the operation data generated by the network elements will typically be different from network element to network element, due to differences in manufacturer and equipment type. For example it is common to generate 90 M/bytes of data every 15 minutes in an asynchronous transfer mode (ATM) network. The amount of data generated describing operation of a communications network is likely to increase in the future as new technologies become available and network elements generate more comprehensive data describing more operational parameters, and at more regular intervals. The efficient processing of such large volumes of data and its use to manage networks is a problem considered by various workers in the prior art^{11,19}.

The main problem in analyzing network performance data is that a vast amount of data is collected in order to make predictions about future trends. Many workers have produced prior art literature which is restricted to describing the performance analysis of individual specific domains of operation of a network, for example asynchronous transfer mode (ATM), specific configurations of networks, for example wide area networks (WAN), and specific aspects of operation of networks, for example flow control (congestion control), either over the whole network¹, or on a link by link basis^{2,3}. Methods for controlling traffic flow using a credit update protocol⁴, where messages are sent to a source end when congestion occurs, or flow control algorithms¹ are also proposed. Other authors concentrate upon investigating characteristics of data traffic itself^{5,6,7,8} by producing formulae describing the spatial and temporal dependence of traffic flows, and try to find models which describe the fractal-like, almost random non-predictable pattern of traffic arrival which occurs in ATM traffic networks⁹. Certain workers in the prior art have concentrated on local area networks. Marshall et al ⁸ propose protocols for reducing the congestion in local area networks, but in this work the protocol models are compared with one week's worth of data, which fails to take account of the fractal-like nature of ATM traffic. A few authors, for example Marshall et al ⁸, Garrison et al¹⁰ and Potogerous et al¹¹, discuss the analysis and prediction of real traffic flows. These workers look at simple statistic analysis of networks in terms of key performance parameters. Kajiyana et al¹² discuss this control of quality of service (QoS) related performance parameters, as opposed to generalizations of control of congestion.

In some domains, for example the ATM domain, it is difficult to sift out relevant performance measurements from irrelevant ones. In general, suggested systems and methods for network management and traffic control in the prior art have taken a piecemeal approach, which is dictated largely by the vast volumes of data generated by communication networks.

In the field of computer science there have been developed techniques for analyzing large quantities of data where desired patterns or relationships in the data are too difficult to identify manually. One such technique is loosely referred to as data mining. In some respects, data mining represents an improvement over earlier approaches for achieving the same aim, such as purely statistical methods, or neural network methods, since it is easier to apply knowledge of a system to guide a search for hidden patterns of knowledge buried in the data, using the data mining technique. An explanation of a typical data mining process has been given in "Statistical Tools for Data Mining" by Sally Maclean at a seminar entitled "Data Mining" held at the Heathrow Park Hotel London 11/12 July 1995 as follows:

"Data mining is concerned with the extraction of new knowledge from data. As databases have become larger there has been an accompanying growth in the potential for data mining, or Knowledge Discovery in Databases (KDD). This methodology is particularly suited to data sets where there is a richness of data structures and a large amount of data available. Data mining, which may be considered as a convergence of machine learning, database technology and statistics, is a fast-growing area which is becoming increasingly important.

The data mining process may be regarded as consisting of a number of stages which we broadly classify as: (1) data cleansing, (2) exploratory data analysis, (3) data selection and (4) data analysis. Statistical tools are utilized at each of these stages as follows:
- Data Cleansing - before commencing analysis, we must first remove all data values which are erroneous or irrelevant, which statisticians term outliers. Such data needs to be distinguished as their presence will impede the mining process which is concerned with looking for patterns or unusual data. However, some outliers may be of considerable interest so for data mining we must remove the "bad" outliers and retain the "good" outliers. Ideally we would like computer-aided data cleansing to separate the rogue data from the informative.
- Exploratory Data Analysis - before commencing the analysis proper, we must first explore the data using a combination of summarization tools and exploratory graphical methods which employ modern visualization techniques. For Exploratory Data Analysis we require flexible, interactive graphics in order to force attention on the data's most salient features through emphasizing graphical display.
- Data Selection - data is selected for analysis using (i) sampling to reduce the amount of processing required and improve efficiency, (ii) data segmentation, where we identify variables which are inter-related and should be analyzed as a group; (iii) data reduction to reduce complexity and improve performance and (iv) variable definition, where we derive new variables, which may be more meaningful, from existing ones.
- Data Analysis - a large number of statistical methods are appropriate for data analysis. Such analysis is mainly concerned with finding rules, patterns or interestingness in the data. In addition, there has been a convergence between artificial intelligence methods of solution and traditional statistical techniques. Some work has been carried out to provide automated environments for statistical analysis thus facilitating their applicability to data mining.

Statistical tools, when combined with other technologies such as artificial intelligence and databases, may thus provide a powerful battery of tools for Knowledge Discovery."

Further prior art references to the technique of data mining are found in the literature^{13, 14, 7, 16, 17, 18}, from which it can be seen that the general concept of data mining encompasses many data processing techniques, and encompass many fields of application. Data mining is a comparatively new technique which is developing rapidly. Most recent work has focused on ideas behind and development of new data mining tools^{13, 14, 15, 16}. Most of these tools are in initial stages of development or in the process of being tested on significant (about 500 M/bits or larger) amounts of data. It is thought that they provide the ability to make trend predictions without the tool user being required to sift through large amounts of data. Other new tools described by various authors^{17, 18} have dubious theoretical basis. For example, the model described by Walburn et al¹⁸ only fits data over a two hour interval, and is very inaccurate when used over other time periods. Processes followed in prior art data mining techniques generally include an analysis of a system problem, followed by determination of key data features which enable the system problem to be resolved. Data is cleansed to remove erroneous data, such as statistical outliers caused by human error, outliers of distribution, causing skewing of the whole distribution, outliers in the system model and slippage. A decision is then made as to whether the data will be mined for classification purposes, or for approximation of behavior. If the data is to be mined for classification purposes, clustering of the data may be carried out to assign objects in to similar classes. Clustering may be carried out using prior art techniques such as fuzzy clustering²⁰, fuzzy neuro-clustering²⁰, neural networks^{21, 22, 23}, knowledge based approaches^{20, 21}, rule induction^{22, 24}, case based reasoning²⁵, or knowledge guided induction²⁶. The few prior art data mining tools that have been developed use the above techniques, and Prior art data mining tools are presently under developed.

In a broad sense, data mining can be regarded as adaptive selection of data using knowledge of the data or a system which produced the data. However, the broad technique of data mining has hitherto not been considered appropriate for analyzing communications network performance and particularly traffic congestion problems and has not been applied for controlling reconfiguration of networks, partly due to the complexity of communications networks. Problems with existing data of mining tools, which lead away from their usage in communications applications are as follows:
- They are not scaleable or generic, and application of the prior art data mining tools cannot be easily altered;
- Existing data mining tools operate on accumulated "historic" data which has accumulated over a period ranging from minutes to weeks. This places considerable data storage requirements on any apparatus adapted for performing data mining in accordance with prior art data mining processes.
- Prior art data mining tools require data cleansing, ie preprocessing of the raw data. This data cleansing introduces significant data processing delays.
- Prior art data mining tools require the knowledge base of an expert in order to operate.

### Summary of the Invention

Specific methods and embodiments according to the present invention aim to provide a means for analyzing data generated by a network, for example a communications network, which is capable of operating on raw data, including outliers, as generated directly by the network.

A further aim of specific methods and embodiments according to the present invention is to provide analysis of describing the operation of a communications network data in real time, or with relatively short delays.

A further aim of specific methods and embodiments according to the present invention is to provide recognition of trends in data describing a communications network, and to relate these to underlying problems in the data source.

A further aim of specific methods and embodiments according to the present invention is to provide a means for collecting and analyzing data describing operation of a communications network, which is generically applicable for considering data from a wide range of data sources.

A further aim of specific methods and embodiments according to the present invention is to provide a means for correlating a data trend occurring in a first type of data describing a first domain of operation of a communications network with a data trend occurring in a second type of data describing a second domain of operation of the communications network.

A further aim of the specific methods and embodiments according to the present invention is to provide a means for collecting data from data sources comprising two separate networks, and to correlate data trends arising in data collected from a first network, with data trends in data arising from a second network.

According to a first aspect of the present invention there is provided a method of monitoring performance parameter data as recited in claims 1 to 11 herein.

According to a second aspect of the present invention, there is provided a monitoring apparatus as recited in claim 12 herein.

According to a third aspect of the present invention, there is provided a method of monitoring a communications network as recited in claims 13 and 14 herein.

According to a fourth aspect of the present invention, there is provided a method of monitoring a communications network as recited in claims 15 to 18 herein.

According to a fifth aspect of the present invention, there is provided a method of measuring the performance of a communication network as recited in claims 19 to 29 herein.

This may enable performance measurement to be carried out more easily by less skilled operators, even for networks which have complex performance parameters are large quantities of data representing the parameters.

According to a sixth aspect of the present invention, there is provided a method of reconfiguring a network as recited in claim 30 herein.

This may enable a network configuration to be optimized more quickly and/or to be optimized by less skilled operators, even if large quantities of data relating to performance parameters are produced.

The invention includes a system for carrying out the method of the fifth and sixth aspects.

Preferably, the system uses a functional programming language. This facilitates adaptation and use with live data.

According to a seventh aspect of the present invention, there is provided a system as recited in claim 33 herein.

The system may be easily be adapted to a changing network or to changing measurement requirements.

According to an eighth aspect of the present invention, there is provided a system as recited in claim 34 herein.

This may enable the function to be applied to different types of data.

According to a ninth aspect of the present invention, there is provided a system as recited in claim 35 herein.

Using live data enables faster response and reduces storage requirements. Live data comprises data which is processed immediately it enters the system from the network, without first being accumulated by the system.

The invention includes a network analysis system as described herein above implemented using the GOFER programming language.

This enables easy development and adaptation to different requirements and different applications.

The advantageous features of claims 20, claims 21 or claim 22 facilitate reconfiguration, particularly by less skilled operators of for complex networks.

The advantageous features of claim 23 facilitate measurement of patterns or relationships which are difficult to identify manually.

The advantageous features of claims 24, 25 or 26 enable measurement of more complex features.

The advantageous features of claim 27 facilitate measurement of more complex parameters.

The advantageous features of claim 28 enable a quicker response and may reduce data storage requirements.

The advantageous features of claim 29 represent an application within important consequences, which may be complex and so is particularly suited to the features of the invention.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 illustrates schematically a communications network comprising a plurality of network elements in the form of node devices and link devices, the network being controlled through first and second network controllers;
Fig. 2 illustrates schematically a basic unit of first and second node devices linked by a link device, and illustrating a set of layers of the network, comprising an equipment layer having a node level and a component level, a connection layer, and a service layer;
Fig. 3 illustrates schematically a general overview of data processing applied to performance signals generated by individual network elements, implemented by a network monitoring and diagnosis apparatus according to a specific embodiment of the present invention;
Fig. 4 illustrates in general overview a monitoring and diagnosis equipment for monitoring and diagnosing performance and problems in a communications network;
Fig. 5 illustrates schematically a network controller configured as a network monitoring and diagnosis apparatus for implementing monitoring and diagnosis methods according to the present invention;
Fig. 6 illustrates schematically a functional overview of the apparatus of Fig. 5;
Fig. 7 illustrates generalized steps in a data mining process for monitoring performance data of the network;
Fig. 8 illustrates schematically a layout of performance parameters and performance limits with respect to network elements, segregated in to a plurality of domains of operation of the network;
Fig. 9 illustrates schematically examination of performance data of the network with respect to a plurality of different domains of operation of the network;
Fig. 10 illustrates schematically data processing steps comprising a method of diagnosis of performance parameters and parameter data corresponding to the network;
Fig. 11 illustrates one example of data processing steps comprising a method of visualization of performance data of a communications network;
Fig. 12 illustrates schematically a first plot type for visualizing performance data of a communications network;
Fig. 13 illustrates schematically a screen display of a second plot type for visualizing performance data of a communications network;
Fig. 14 illustrates schematically a set of performance data corresponding to a network element and connected network elements, in relation to parameters at different layers with a domain of operation of a communications network;
Fig. 15 illustrates schematically a simplified three layer model of a known ATM network;
Fig. 16 illustrates Shlaer-Mellor information model of a prototype according to the second specific embodiment of the invention;
Fig. 17 illustrates schematically a second specific embodiment according to the present invention;
Fig. 18 illustrates schematically features of the second embodiment of Fig. 17, and additional features including a network reconfiguration feature;
Fig. 19 illustrates schematically the second specific embodiment of Fig. 16, and additionally shows features including visualization and inter-parameter comparison means;
Fig. 20 illustrates an alternative information model according to a third specific embodiment of the present invention; and
Fig. 21 illustrates schematically a further information model according to a fourth specific embodiment of the present invention.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without using these specific details. In other instances, well known methods and structures have not been described in detail so as not to unnecessarily obscure the present invention.

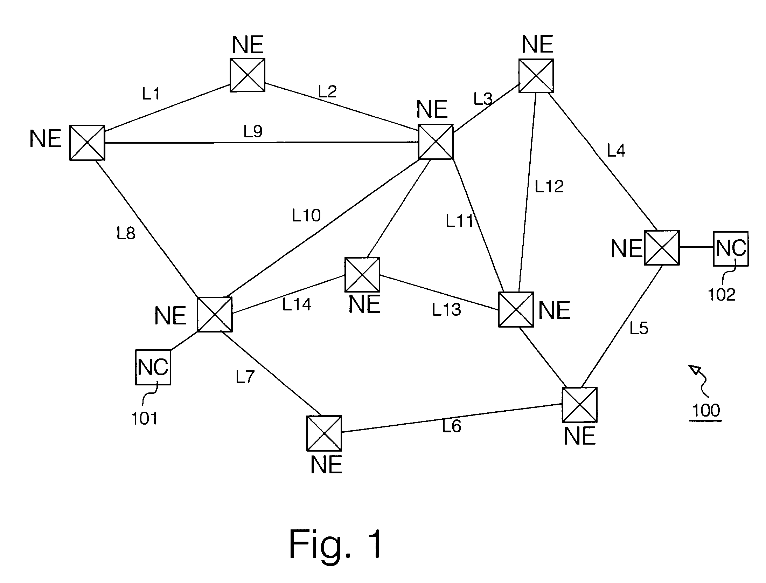

Referring to Fig. 1 herein, there is illustrated schematically a heterogeneous communications network 100 comprising a plurality of network elements (NE) including a plurality of node devices for example switches, multiplexers/demultiplexers, optical regenerators, mainframe or personal computers, transmitters/receivers, linked by a plurality of link devices for example optical fiber links, coaxial cables, wireless links. The communication network may comprise network elements operating in accordance with different protocol domains, for example transmission control protocol /Internet protocol (TCP/IP), asynchronous transfer mode (ATM), synchronous digital hierarchy (SDH), synchronous optical network (SONET), or Groupe Système Mobile (GSM) wireless protocols.

A plurality of the network elements are under control of one or more network controllers 101, 102. Each network controller holds a database map of the network elements and their interconnections. Reconfiguration and control of operation of the network elements can be made by the network controllers, which send operation and maintenance signals throughout the network for controlling individual network elements. The network elements can either be controlled automatically by the network controller, or by a human network operator, implementing changes to the network elements using the network controller. Individual network elements generate performance signals describing the performance of operations carried out by the individual network elements with respect to various parameters of the network. The network controllers 101, 102 receive performance signals from the network elements and may store these in a database, for example a management information base (MIB) of the network controller.

A typical network element such as a switch, multiplexer or cross connect, may generate performance signals at periodic intervals, for example every 15 minutes. These performance signals are transmitted over the network to the network controller where they are collected along with performance signals from a plurality of other network elements. Typical volumes of data collected during a 15 minute interval by a network controller can be of the order of 90 M/bytes. As a network may comprise a large number of network elements, manufactured by different manufacturers, a large number of types of performance signal can be generated by the network. In order to control operation of the network, network operators are generally interested in a range of different performance parameters which can be determined from the large number of performance signals type generated by the network elements. A network element may be carrying data in a number of different transport mechanism domains. For example a synchronous digital hierarchy multiplexer may be carrying synchronous transfer mode (STM) frames, within which are carried asynchronous transfer mode (ATM) cells. If there is a problem with the multiplexer leading to reduced performance, the reduced performance may manifest itself in terms of performance signals in a variety of ways. For example quality of service parameters defined in the asynchronous transfer mode protocols⁵¹ may be affected by poor multiplexer performance, and bit error rate performance parameters in the SDH domain may also be affected by the same performance deficiency. Changes in parameters describing quality of service in the ATM domain may result from a same hardware problem as changes in bit error rate in the SDH domain.

A problem addressed by the specific embodiments, methods and processes according to the present invention is to filter the large amounts of raw or live data produced by the network elements to obtain data signals describing key performance parameters of the network and network elements at different levels of operation of the network, and in different domains of operation of the network. The specific embodiments, methods and processes may provide an efficient way of displaying the performance parameters, so that a human operator of the network can easily visualize performance and operation of the network and network elements, and identify trends of performance data and patterns of performance data which may indicate problems arising within the network. Further, the specific embodiments, methods and processes may provide a means of diagnosing operations of the network and network elements, and provide help information as a result of the diagnosis, to aid human network operators in reconfiguration of the network to provide improved network performance. In a further development of the specific embodiments, methods and processes, reconfiguration of network elements may be made automatically as a result of the diagnosis. There will now be described schematically in general overview a methodology for approaching a solution to these problems in a communications network operating a plurality of different transport protocol domains of operation and encompassing a plurality of different network elements of different manufacture.

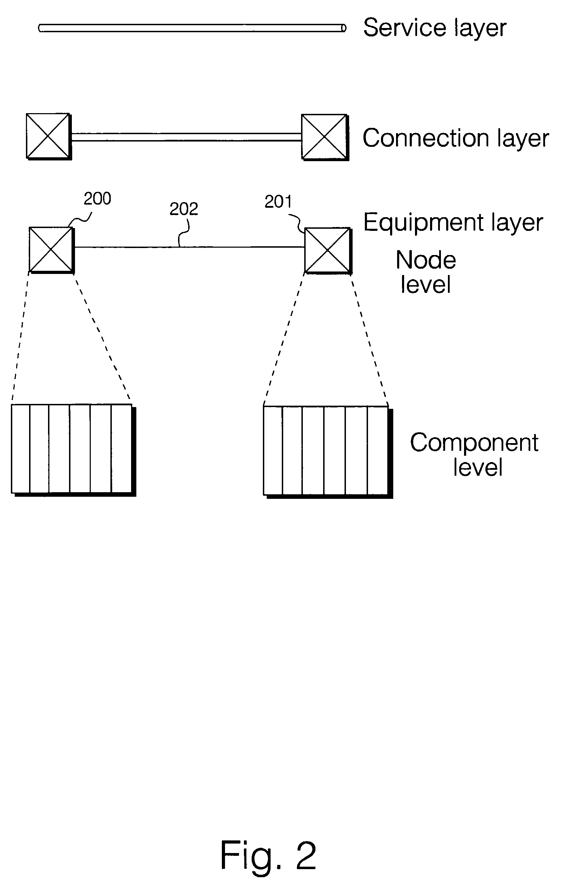

Referring to Fig. 2 herein, there is illustrated a portion of a network, comprising first and second node devices, 200, 201 connected by a link device 202. Each node device generates performance signals describing operation of the device and its constituent components. Individual components constituting the node devices generate performance signals describing their operation. Thus, performance signals describing operation of the node elements are available at a component level. Additionally, in some types of node device, eg some types of prior art switches such as the Concorde ® switch manufactured by Northern Telecom Limited, performance signals are available describing operation of the switch as a whole with respect to individual performance parameters. Thus, signals describing performance parameters operating at a node level are available. By receiving performance signals from first and second node elements 200, 201 data describing communications connections between the two network elements can be determined at a connection layer of the network. By collecting performance signals from a plurality of network elements, performance parameters describing performance of a service, for example a permanent virtual circuit, in the case of an ATM network, can be determined at a service layer.

Types of service which can be supplied in an ATM domain of operation include:
- CBR - Constant Bit rate. This service is required for audio telephone.
- VBR (Variable Bit Rate) - often provided for video links.

Quality of service provided by a given network is determined by many different performance parameter.

Types of performance parameters of interest in the ATM domain in particular include quality of service. Quality of service is determined by performance signals representing parameters of:
- CLR - Cell Loss Ratio
- CTD - Cell Transfer Delay
- CDV - Cell Delay Variation

These three quality of service parameters are important because between them, they give an indication of network performance at a variety of layers of operation over the network.

Cell loss ratio (CLR) constitutes a measurement of the traffic cells flowing in a network, which are discarded. Cells may be discarded for one of two reasons. Firstly, and most importantly, congestion in a network may mean that cells cannot travel through the network and are discarded or "lost". This may occur if at any given time there is insufficient bandwidth available to transmit all the traffic which is flowing or attempting to flow in a network. Cell loss ratio is a measurement of the ratio of the discarded cells to the cells transmitted across the network.

Secondly, cells can also become discarded because a user is trying to send more traffic through the network than the user has paid for. A user's cells may be discarded by a network manager which applies a cell loss policy for users who exceed their negotiated cell throughput specified in a traffic contract. By insuring a user cannot transmit more cells than allowed for in the traffic contract, quality of service for other users can be maintained, as overloading of the network can be minimized or avoided.

Cell loss ratio is a good indication of how much traffic flows through a network, and whether a band allocated to specific traffic has been allocated correctly according to a customer's required usage. The maximum allowable cell loss ratio measurement for keeping within a specified quality of service is dependent upon the type of traffic. For example some types of traffic are more sensitive to cell loss than others.

Cell delay variation (CDV) provides an indication of how congested a network is, by providing a measure a time taken for bi-traversal of signal across the network. Allowable values of cell delay variation, to maintain a specified quality of service, are dependent upon the type of data traffic. However, in general the smaller the value of cell delay variation the better. Some types of service, for example voice connections, are more sensitive to cell delay variation than others, for example computer generating data. Cell delay variation constitutes the measure of the "echo" in a network.

Cell transfer delay (CTD) gives an indication of how long it takes for given types of traffic to be transferred from its source to its destination. Allowable values of cell transfer delay to maintain a specified quality of service a traffic dependent.

In a synchronous digital hierarchy domain, different measures of network performance are applicable. In particular, Bit Error Rate (BER) is of particular interest as a measure of performance. The Bit error rate in a network is a rate of loss of individual bits of information. It is desirable to keep the Bit error rate as low as possible.

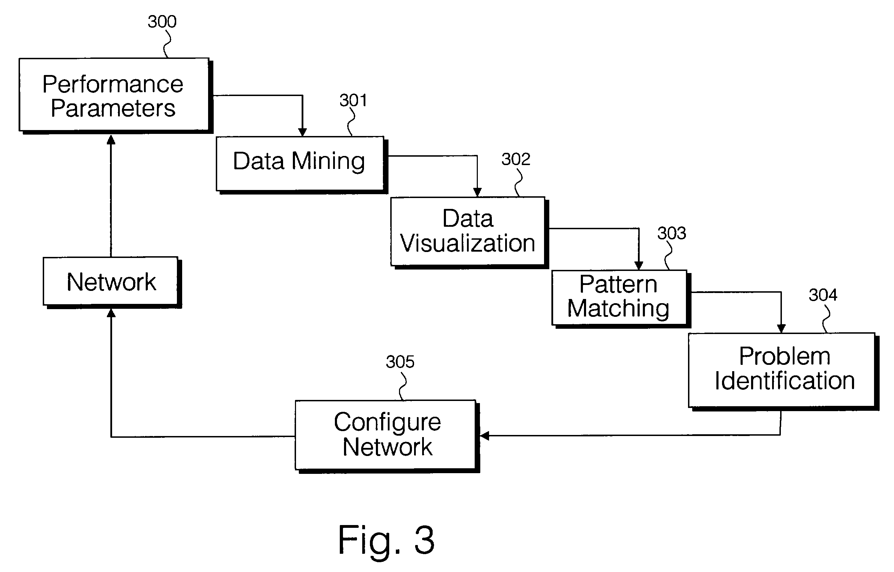

Referring to Fig. 3 herein, there are illustrated steps for implementing a general method of monitoring and diagnosing network performance. In step 300 performance parameters describing operation of the network are obtained from a network element in the form of performance signals, which contain performance parameter data. In step 301, data mining of the obtained performance parameter data is carried out, in order to identify any performance parameters of the network which are outside predetermined limits, or which are exhibiting unusual behavior. In step 302, it is determined for any performance parameter data which are outside predetermined limits, or which are exhibiting unusual or interesting behavior, a method of presenting the performance data in an optimum way, such that the performance parameters described by the performance data can be readily visualized by a human operator of the network. In step 303 unusual or interesting patterns or trends in the obtained performance data, are identified. In step 304, any patterns or trends or out of limit parameters indicating problems which may be occurring in the network are diagnosed and solutions to the problems are generated in the form of help data for remedying such problems. The help data suggest reconfigurations of the network elements for remedying or improving problems. In step 305, the network may be reconfigured in accordance with a result of the problem identification and help data generation step 304, and suggested reconfiguration may be implemented in the network.

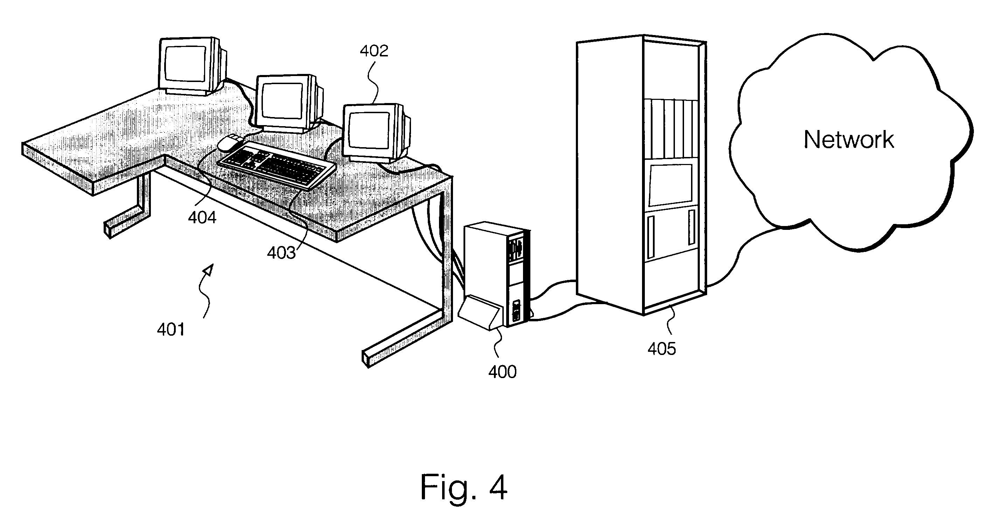

Referring to Figs. 4 to 6 herein, there is shown an overview of a network controller apparatus capable of implementing the general monitoring and diagnostic methodology described with reference to Fig. 4 herein. The apparatus comprises a network controller 400 for example a Hewlett Packard 9000 Series Workstation having a graphical user interface 401 including one or a plurality of video monitors 402, one or more a keyboards 403, and pointing device 404, and data entry means, e.g. a floppy disk drive, CD ROM, or other data entry device. The workstation is connected to a network element 405 of the network, for receiving performance data signals from network elements comprising the network, routed through the connected network element 405.

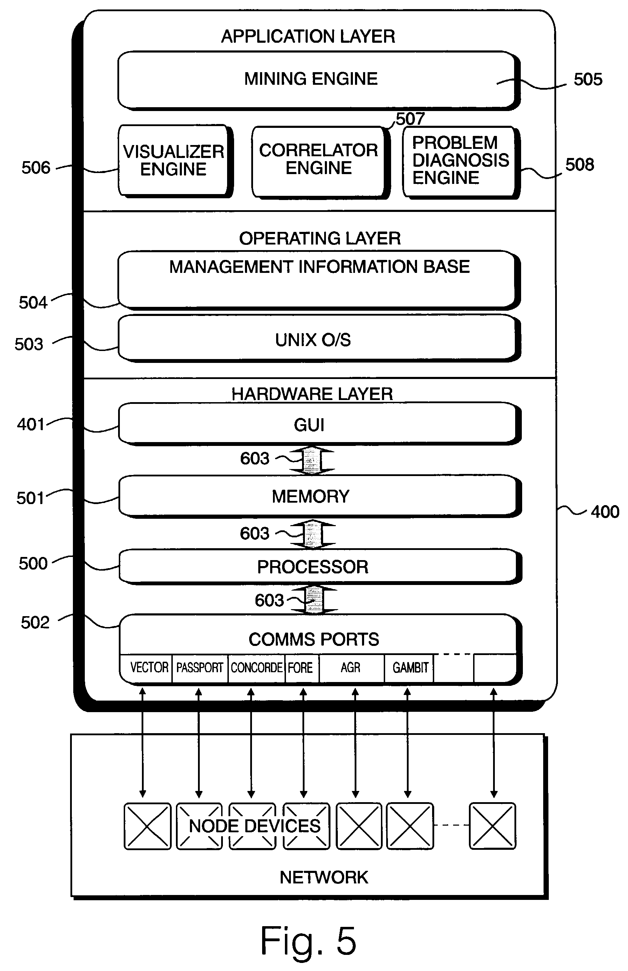

Referring to Fig. 5 herein, the network controller apparatus comprises a processor 500; memory storage device 501; the graphical user interface 401; a plurality of communications ports 502 for receiving performance signals from the connected network, the communications ports adapted to communicate with a plurality of different types of network element, for example a known Vector ® type switch, Passport ® type switch, Concorde ® type switch, Fore ® type switch AGR, ® type switch, or Gambit ® type switch all available from Northern Telecom Limited; an operating layer comprising an operating system for example the known UNIX operating system 503; a management information base 504 in the form of a memory storage device containing performance signals obtained through the communications port 502 from the network elements; an application layer comprising a mining engine 505, a visualizer engine 506, a correlatr engine 507, and a problem diagnosis and solving engine 508.

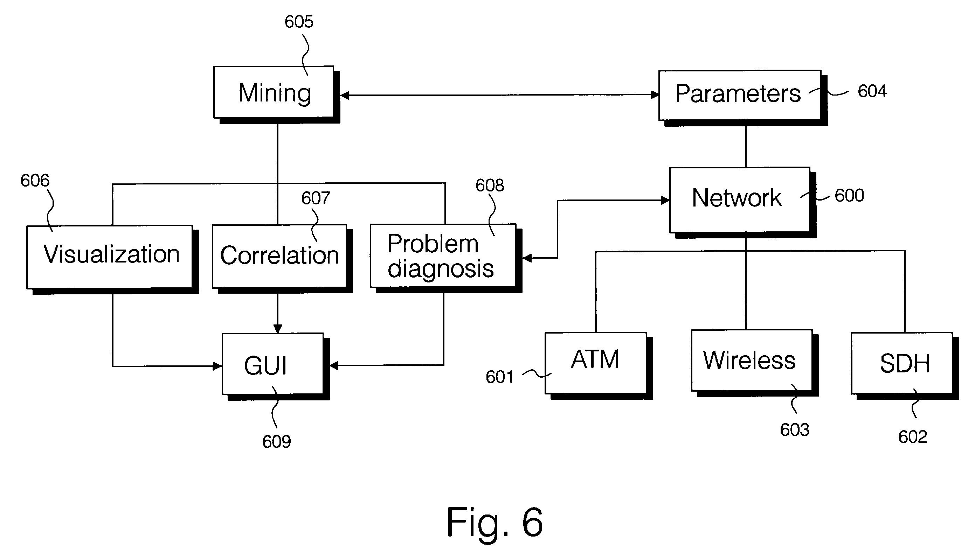

Referring to Fig. 6 herein, there is shown a functional overview of the monitoring and diagnostic apparatus comprising the network controller of Fig. 5 in the form of an object oriented information model describing relationships between data as processed by the processor 500 in accordance with the control instructions comprising the mining engine application 505, visualizer engine 506, correlator engine 507 and problem diagnosis engine 508, operating on data signals stored in the management information base data storage medium 504. The communications network is represented by a network object 600 which has a plurality of domain objects, each representing performance data relevant to a separate mode of operation of the network elements. For example where the network elements are capable of operating in accordance with the asynchronous transfer mode (ATM) a list of performance data describing performance data relevant to ATM operation are stored in the form of an ATM domain object 601. Similarly, where the network elements are capable of operating in accordance with synchronous digital hierarchy mode, performance data relevant to operation of the network elements in synchronous digital hierarchy mode are stored as signals comprising an SDH domain object 602. For example, performance data signals describing bit error rate may be represented by the SDH domain object. Similarly, performance data relevant to a wireless mode of operation is stored as signals describing wireless performance parameters, in a wireless domain object 603.

Data describing types of performance parameter are stored as a parameter object 604 which is referenced by a mining object 605. Performance data arising from the ATM, wireless or SDH domain objects, i.e. raw performance data arising from the network, is operated on by the mining engine 505 represented by mining object 605. The mining engine 505 filters the raw data to check whether the raw performance data is within or outside predetermined performance parameter limits stored entered in to the management information base 504. In terms of the information model of Fig. 6, the performance parameter limit data in the parameter object 604 references to the data mining process carried out by the mining engine 505 and represented in the information model as mining object 605. The mining engine 505, having identified performance data representing performance parameters which are out of limit refers the out of limit, performance data to the visualizer engine 506, correlator engine 507, and problem diagnosis engine 508, which may all operate on the out of limit performance data either in parallel or serially, depending on the selected operating system of the network controller. In the case of the network controller operating a UNIX based generating system, parallel operations may be implemented. Operation of the visualizer engine, correlator engine, and problem identifier engine are represented in the information model of Fig. 6 by visualization object 606, correlation object 607, and problem object 608 respectively. The graphical user interface 401 is represented by a user interface object 609, which is referred to by visualization object 606, correlation object 607 and problem diagnosing object 608 for display of data produced by these objects. The user interface 401 may comprise one video monitor, in which case screen displays corresponding to the results of the visualization process, correlation process or problem diagnosis process may be viewed alternatively using the same video screen. On the other hand, where user interface 401 comprises three video monitors, results of the visualization process, correlation process and problem diagnosis process may be viewed simultaneously, on different screens of the user interface.

The management information base (MIB) 504, mining engine 505, visualizer engine 506, correlator engine 507, and problem diagnosis engine 508 in the best mode herein are implemented by means of control instructions stored in a data storage medium of the workstation, the control signals operating to control processor 500 to process raw performance data generated by the network elements in accordance with the information model described with reference to Fig.6 herein in order to produce displays of the results of a data mining process, visualization process, correlation process and problem diagnosis and solving process as will now be described in greater detail.

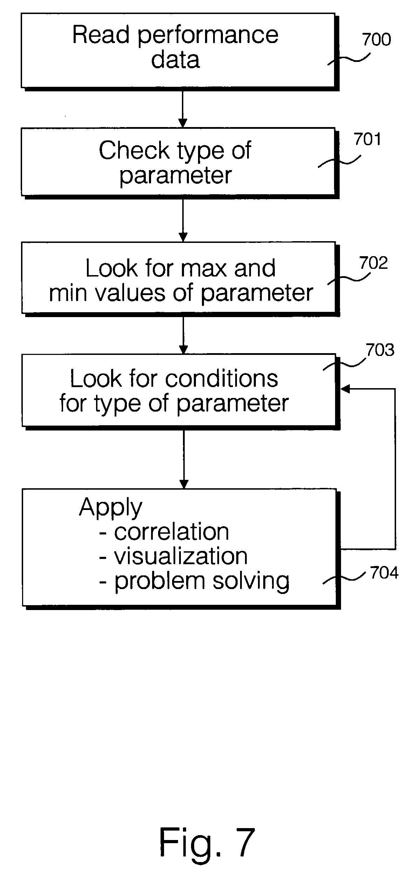

Firstly, the mining engine 505 operates as follows. Referring to Fig. 7 herein, in step 700, the mining engine 505 obtains performance data from the network. The performance data may be read from the management information base 504 of the workstation, or from a separate data accessing application which may be provided for interrogating individual network elements to obtain the relevant performance signals. In step 701, the mining engine checks the type of parameter being read, and in step 702 looks up a stored database table for allowed maximum and minimum values of the type of parameter represented by the performance data. In step 703, if the performance data represents a performance parameter which is outside predetermined limits checked in step 702, the data mining engine refers the performance data to the visualization engine 506, correlation engine 507 and/or problem diagnosis and solving engine 508 in step 704. If the performance data represents performance parameters which are within the limits obtained in step 702, the data mining engine continues to input further performance data and repeats steps 700 and 701 until performance signals representing performance parameters which are out of limit are found.

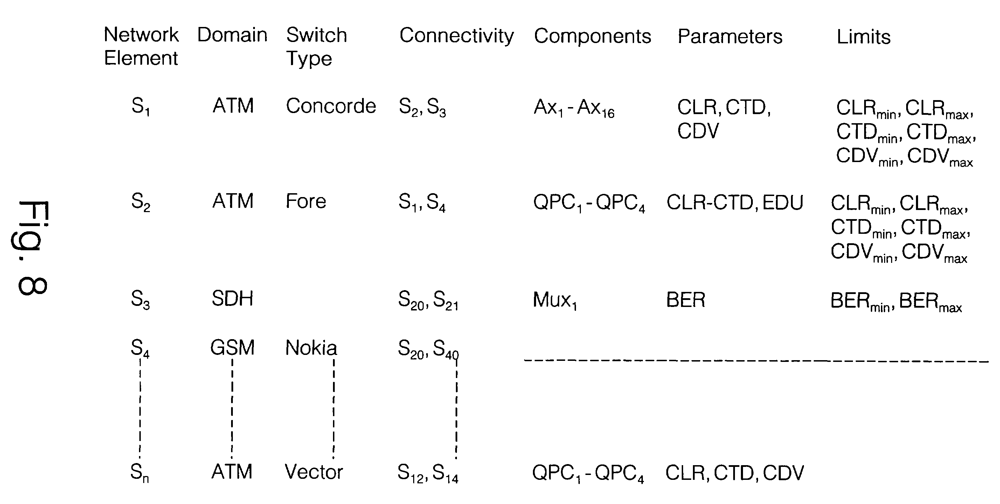

Referring to Fig. 8 herein, there is shown an arrangement of data signals in a memory storage device, which the mining engine 505 refers to check the type of parameter in step 701, and maximum and minimum values of parameter in step 702. Data is stored in the form of electronic signals in the management information base, the signals describing for each network element in the network, the type of network element, its domain, the manufacturer and model of the network element, the connectivity of the network element to other network elements, the type of individual components of the network elements, parameters for which performance is available from the individual components and/or the network element as a whole, and limits for which performance signals representing performance parameters of the network element must fall within to satisfy performance criteria such as specified Bit error rates, and quality of service. For example in the case of a first switch S1 in the ATM domain, switch type may be the Concorde switch available from Northern Telecom Limited, which may be connected to neighboring switches S2, S3. The components of the Concorde switch may include sixteen Ax cards, from each of which the QoS parameters of cell loss ratio, cell transfer delay, and cell delay variation are measurable. Limits for the CLR, CTD, and CDV parameters are included in the table.

In the best mode herein, implementation of the mining engine is made by storing control instructions in a data storage medium of the network controller apparatus, the control instructions taking the form of a program for operating the processor 500. The control instructions may be programmed in a variety of languages, but in the best mode herein the programming language C or C++ may be used, being languages which are suitable for object oriented programming, and which are widely known and understood. The implementation of the data mining engine may in the best mode herein uses case based reasoning techniques. Data mining is implemented as a list of IF THEN statements, an example of which is given in pseudo code hereunder:
**If parameter 1 > value 1 and parameter 2 < value 2 then refer to VIZ.**
**If parameter 1 > value 1 and parameter 2 > value 3 then refer to Corr.**
   Where VIZ and Corr represent the visualization engine and the correlator engine respectively.
   The parameters are those shown in the sixth column of Fig. 8 and the limits are shown in the seventh column of Fig. 8. The limits are presetable by a user of the network controller, and can be altered dynamically by other applications, or using the keyboard or other data entry device, for example by downloading new parameters from floppy disk or the like.
   The mining engine 505 examines different domains of operation of the network on a cyclical basis. For example, the mining engine 505 may implement the processes of steps 700 to 704 searching performance parameters corresponding to an ATM domain. After the end of a predetermined period, the mining engine 505 may then examine performance data of a network in respect of the SDH domain, applying SDH domain parameters and values in the case based reasoning statements. However, whether the data mining engine examines data in respect of different domains sequentially over predetermined periods, or whether the mining engine 505 examines the parameter data signals one at a time, in respect of all domains depends upon how the mining engine is configured, and how the case based reasoning statements are preset. The case based reasoning statements may either be configured such as to examine all currently available performance data with respect to parameters in one domain, before examining the currently available performance data for parameters in another domain, or alternatively the case based reasoning statements may be configured to select each performance data signal in turn and examine that performance data item for parameters of all domains, before moving on to the next performance data item. In either case, the mining engine, operating a series of logic operations in accordance with programmed statements comprising the case based reasoning method, examines each available performance data item and applies a set of logical statements to that performance data signal to check whether it is within or outside predetermined limits for that item, corresponding to predetermined limits of performance parameters and performance signals. Depending upon the result of the logic operation, the performance data is then examined by the visualization correlation engine, or problem diagnosis and solving engine, or the performance data, if within the limits, is not selected for examination by the visualization, correlation and problem diagnosis engines.
   Referring again to Fig. 2, in considering the performance data, the data mining engine considers performance signals in relation to network elements sequentially, and after examining the performance signals generated by the first network element, moves on to examine the performance data signals of an adjacent network element. Thus, in order to check whether a service parameter between first and second network elements is within or outside predetermined limits, the mining engine examines firstly the performance signals from the first network element through which the service connection is made, and then of the second, adjacent, network element through which the service connection is made in order to collect the relevant performance parameter data for determining the value of the service parameter represented by the performance signals obtained from the first and second network elements. In general, the mining engine may examine performance signals from a plurality of network elements as follows:
   - Examination of all performance signals generated by a single network element with respect to a single domain, prior to moving onto consider the next network element, being an adjacent network element of the network.
   - Examination of performance signals from a first network element in respect of all domains, prior to moving onto examine performance signals from a next adjacent or connected network element.
   - Examination of performance signals generated by the first network element, in respect of one parameter prior to examination of performance signals generated by a next adjacent or connected network element, in respect of the same parameter.

In practice, the order in which the mining engine examines performance signals from the network elements, i.e. selecting the network element, selecting the parameter, and then selecting the next network element, is re-configurable, and can be modified by reprogramming of the data mining engine. However, the data mining engine examines all network elements with respect to all parameters of interest, for a plurality of different domains of operation, the examination of performance signals being configurable by programming the control instructions stored in the data storage medium and controlling processor 500. In the best mode herein, the data mining engine selects network elements of the network in order, stepping across network elements in sequence, moving from element to element between which there are connections, in order to determine service parameters across virtual paths and virtual connections across the network. Where any measured parameters are found outside predetermined limits, these are referred to the visualization engine, correlation engine, and problem diagnosis engines for further data processing.

Referring again to Fig. 7 herein, after the mining engine has progressed through the steps of reading performance data in step 700, checking the types of performance data parameter in step 701, looking for maximum and minimum values of parameters in step 702, the mining engine may or may not have referred data to the correlation engine, visualizing station engine, or problem diagnosis engine. Once any problems occurring in the out of limits data have been identified and any patterns or trends in the data have been identified, the mining engine then iteratively steps through the remaining data checking for problems, patterns and trends.

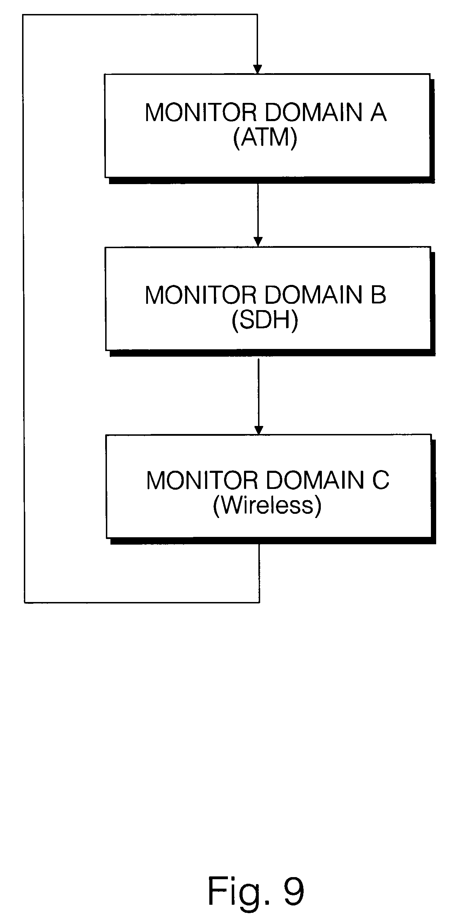

Referring to Fig. 9 herein, there is illustrated a sequence of examination of data parameters with respect to different domains of operation of the network. In step 900, the mining engine examines all performance signals with respect to parameters of a first domain, for example asynchronous transfer mode parameters. Having completed examination of the performance data signals with respect to the first domain, the mining engine then proceeds to examine the performance signals with respect to a second domain, which in this example includes synchronous digital hierarchy parameters. Having completed examination of the performance signals with respect to parameters of the second domain, the mining engine proceeds to examine performance signals with respect to parameters of a third domain, e.g. wireless parameters, and so on until all domains operable within the network have been considered by the mining engine.

Examination of performance data with respect to different domains is implemented through specific configuration of the case based reasoning statements. The case based reasoning statements are configured to apply different tests relating to different parameters of different domains as appropriate to the performance data.

As large volumes of data are examined by the mining engine, processing speed is of importance for a given processor type, having a certain number of instructions per second (IPS) which can be executed, processing speed is optimized by configuration of the case based reasoning statements such that the most important parameters are examined first, before less important parameters and so that the data is filtered to look at the most common out of limit parameter scenarios before less common out of limit scenarios. For example, in the case of asynchronous transfer mode domain, quality of service over a link is of primary importance. The three parameters of cell loss ratio, cell transfer delay and cell delay variation constitute measures of quality of service performance. Since quality of service parameters are likely to be out of limit more often than other parameters in an asynchronous transfer mode domain, processing power of the data examination process can be optimized by placing case based reasoning statements relating to the parameters cell loss ratio, cell transfer delay and cell delay variation early on in the sequence of statements executed by the mining engine.

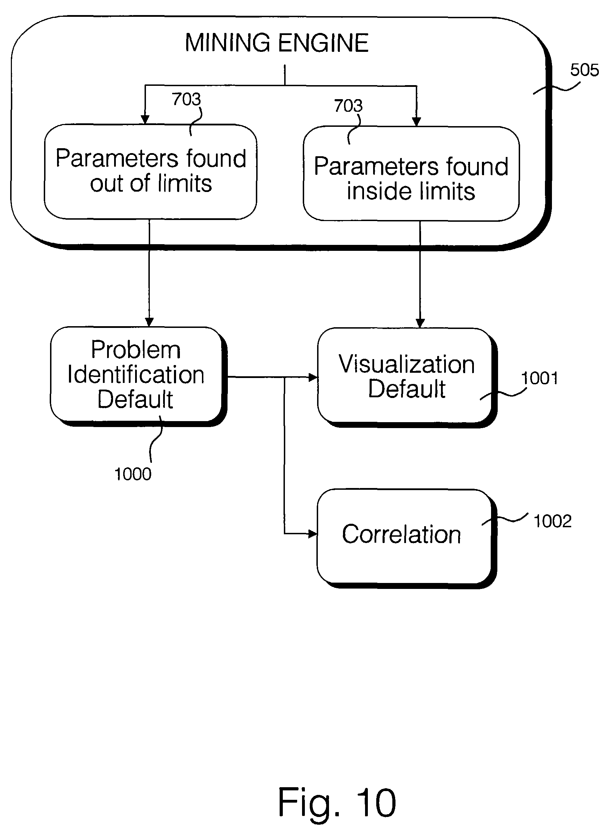

Referring to Fig. 10 herein, processing speed may also be improved by configuring the case based reasoning statements to refer performance signals to the problem engine, visualization engine and correlation engine in predetermined orders of priority. For example if in step 703 performance parameters are found which are outside predetermined limits, the performance data corresponding to those out of limit parameters may be referred firstly to the problem identification engine 508 for diagnosis of problems in the data, before the data is referred to the visualization engine for visualization of those problems, or to the correlation engine to look for correlation of performance data giving rise to that problem, with performance data corresponding to other parameters or other network elements. If in step 703 parameters are found to be within predetermined limits, the mining engine may automatically refer performance data to the visualization engine in preference to the problem engine or correlation engine, such that visualization of the data is the default condition where no out of limit parameters are found.

Examination of the various layers of the network is performed in a sequence determined by the configuration of the case based reasoning statements, and the order in which the performance signals are input into the mining engine. For example, to obtain a measure of cell delay variation across a virtual path would require inputting performance status signals from a plurality of network elements over which the path is connected. The data can be examined at a component level, relating to cell loss and delays at individual components of a network element; at a nodal level relating to performance data representing performance parameters of a complete network element, for example in the asynchronous transfer mode domain, the overall cell loss ratio of the network element considered as a whole; at a connection level, in which case performance parameters relating to a connection between first and second endpoints are examined, which may involve examining individual performance signals generated by a plurality of network elements, in respect to a single parameter; or examination of performance signals may be made at a service level, in which performance signals relating to parameters describing for example a virtual path in the asynchronous transfer mode domain are examined, in which case performance signals from a plurality of network elements through which the virtual path is connected may be examined.

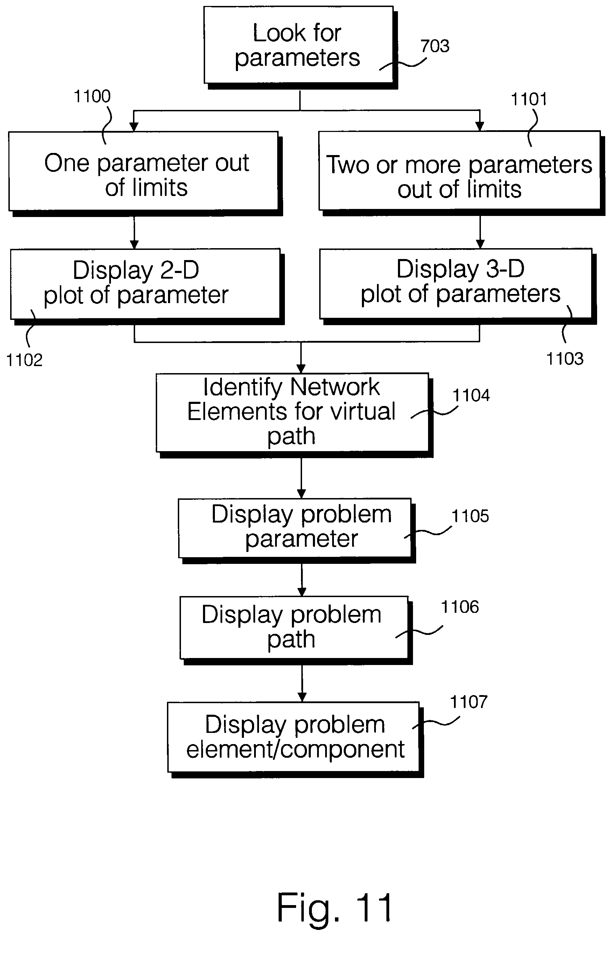

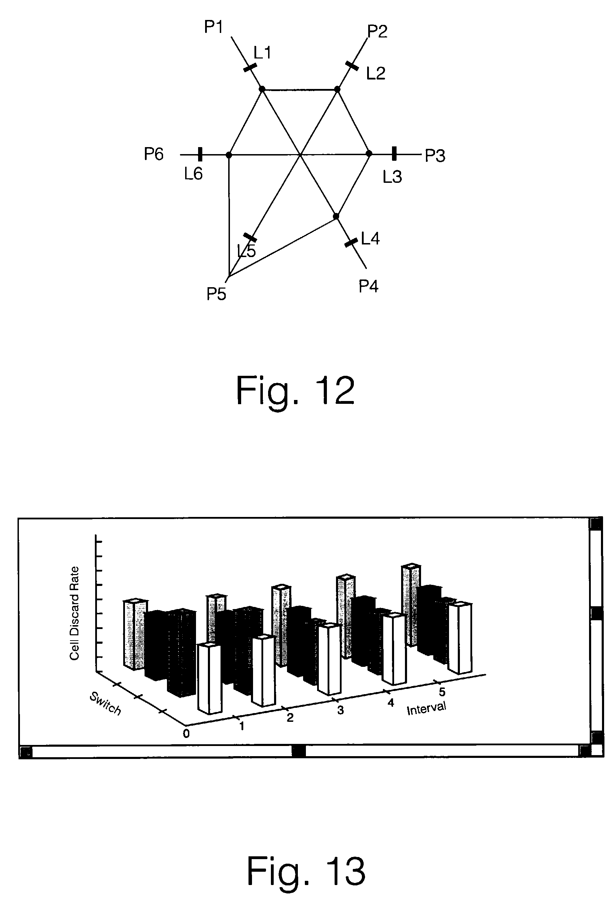

Referring to Fig. 11 herein, there is shown an example of a visualization process implemented by the visualization engine 506. The purpose of the visualization engine is to select a mode of visualization of the performance date which best displays the performance parameters corresponding to the performance data. The best mode for displaying the performance data depends upon which performance parameters are out of limits, and how many network elements, components or connections have parameters which are out of limits. For example in step 1100 if one parameter is out of limits, then a two-dimensional star plot may be an optimum way of displaying that parameter as shown in Fig. 12 herein. In Fig. 12 herein, parameters P1-P6 each have corresponding limits L1-L6 which are shown as radial distances from a central point C of a two-dimensional radially arranged star plot. By arranging a set of parameters in a star configuration, any asymmetries in the star plot, which is displayed as a visual display on the monitor apparatus, will immediately alert a human operator to an out of limit parameter. On the other hand, if two or more parameters are out of limits in step 1101, it may be that in step 1102, a three-dimensional plot provides a more optimal way of visualizing the data, and an example is shown in Fig. 12 herein. Examples of types of display plot include:
- Two-dimensional plot
- Two-dimensional star plot
- Three-dimensional plot
- One-dimensional plot

In step 1104, the problematic data may be displayed on the plot, identifying the particular network element or network elements to which the parameters coincide, for example coinciding with a virtual path. The problem parameters are displayed in step 1105, and the problem path is identified and displayed in step 1106. If the problem parameters arrive from a specific element or problem component, then the specific element or component giving rise to the problem parameter is displayed in step 1107. The visualization engine is implemented as a set of case based reasoning steps in a programming language, for example the language C. A typical layout for a set of case based reasoning statements may be as follows:
**If parameter 1 > value 1 and parameter 2 > value 2**
   **Then use graph type G1**
**If parameter 1 > value 1 and parameter 2 < value 2**
   **The use graph type G2**

The set of case based reasoning statements comprising the visualization engine is preset and configurable by amending the types of parameter referred to in a look up table in the Management Information Base, as indicated in Fig. 8, and by altering the allowable limits within in which the parameters must fall.

The type of graph used for visualization of the data selected depends upon the number of parameters which are out of limit, the type of parameter, and the extent to which they are out of limit. The visualization engine formats the data into the appropriate format corresponding to two-dimensional plot, star plot, one-dimensional plot, or three-dimensional plot and sends appropriate signals to the graphical user interface which performs the actual display of data in graphical format on a video monitor, or as hard-copy print out. By configuring the visualization engine using case based reasoning, difficult display scenarios can be resolved. For example in the ATM domain, where parameters for cell loss ratio and cell transfer delay are within limits, but the parameter for cell delay variation is well outside limits, it may be that a star plot produces a meaningless display, in which case a three-dimensional plot may be specified in the case based reasoning statements. Thus, with practice, a human operator of the apparatus may come to recognize certain types of network behavior by the type of plot they produce. Further, parameters may be displayed on linear or logarithmic scales to take account of large variations in parameter value.

An example of reasoning applied by the visualization engine in the case of three parameters may be as follows. If parameter A is greater than its allowed value, and parameter B is greater than its value and parameter C is within its allowed value, then a star plot may be selected.

Such a logistic operation implemented by case based reasoning in the programming language C may be described by the following line of pseudo code.
**If parameter A > value 1 and parameter B > value 2 and parameter C < value 3**
   **Then → Star plot type 1**

The types of plot selected are configured in the case based reasoning statements such that the most used plots occur early on in the case based reasoning visualization process. The example of pseudo code shown above will be supplemented by further lines of code which take into account the conditions where all parameters A, B, C are within limits; where parameter A is outside limits and parameters B and C are in limits; where parameters A and B are outside limits and parameter C is within limits; where all parameters A, B and C are outside limits; and all combinations of parameters A, B and C are either in or out of limit, with an appropriate type of plot selected in each case. Further, for each other parameter, case based reasoning statements are included to take account of all eventualities and combinations of parameters in and out of limits, with the most common occurrences being listed first in the case based reasoning statements in order to speed up data processing.

The performance data examined and visualized is raw data, i.e. data which has not been preprocessed before entering the mining engine and visualization engine. The data may be live, i.e. processed in real time or near real time as it is generated. For a given a processor having a given processing power in terms of millions of instructions per second, the processing speed can be improved by operating on raw un-preprocessed data. By avoiding preprocessing of parameter data, it may be possible to identify out of limit parameters and refer these to the problem identification and correlation engines, avoiding a preprocessing delay which could otherwise be a delay up to a few minutes. It is important to identify any problems in the network quickly, so that action can be taken to rectify those problems before connections are lost, or quality of service deteriorates.

The correlation engine 507 comprises a set of logic instructions implemented as case based reasoning statements used to operate processor 500, for the purpose of correlating performance data across the network. The performance data can be correlated both inter-domain and intra-domain to identify patterns and trends in the data which may give an early indication of anticipated levels of future performance of the network.

For inter-domain correlation, time sequences of performance data measured from network elements are examined to identify rises or falls in parameters. A rise and fall in one parameter can be compared with data describing another parameter and correlation between rises and falls of two different parameters are made with respect to each network element. Where parameter data describes operation of a component of a network element, different parameters at that component are compared with each other and attempted to be compared and correlated at the individual component level. Cross correlations between equivalent parameters for different components of the same network element are then made.

Where a network element generates performance data signals describing operation of the network as a whole, different parameters describing the whole network element are compared and correlated with each other in order to recognize patterns of data at that network element. For some parameters, for example in the ATM domain, correlation of these of these parameters necessarily requires that performance data signals from a plurality of network elements are examined. The correlation engine may examine first all parameters on a component to component basis and then look at individual network elements, before proceeding to parameters which require looking at a plurality of network elements. Having made intra-domain comparison and correlations between different parameters of the same network elements, and the same parameters of different network elements, the correlation engine may then proceed to the next domain and perform intra-domain comparison and correlation on parameters of the next domain. The correlation engine then attempts to cross-correlate parameters in the first domain with parameters in the second domain, ie inter-domain correlation. For example if in the ATM domain, there is found a high cell loss ratio through a particular network element, the correlation engine will examine the bit error rate of that network element in the SDH domain to see if there is an unusually high bit error rate at that network element. Conversely, if the correlation engine found a particularly high bit error rate in the SDH domain at a network element, the correlation engine would examine the cell loss ratio in the ATM domain at that network element to see if an increase in cell loss ratio coincided or correlated with an increase in bit error rate at the same network element.

The sequence in which parameters and network elements are examined are configurable by pre-setting the case based reasoning statements which implement the inter-domain correlations, inter-layer correlation, intra-layer correlations and intra-domain correlations.

An example of intra and inter-domain correlations is described schematically in table 1 herein. For example in the left hand column there are listed performance parameters in a first domain, domain A which may for example be ATM and in the right hand column there are listed performance parameters in a second domain, domain B which may be for example SDH. Parameters at individual switch fabric cards may be mapped to parameters at a first level, L1 in the SDH domain. Parameters at the nodal level may be correlated with parameters at an equivalent level in the SDH domain, and similarly for parameters such as virtual path parameters at the connection layer and virtual permanent circuit at the service layer may be mapped to equivalent layers in the SDH domain.

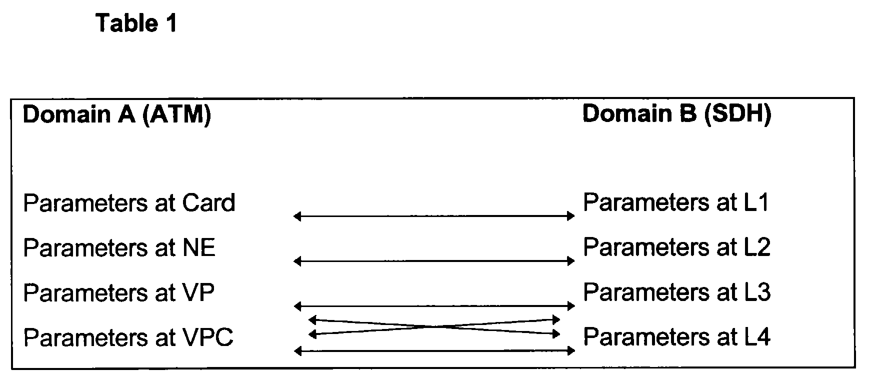

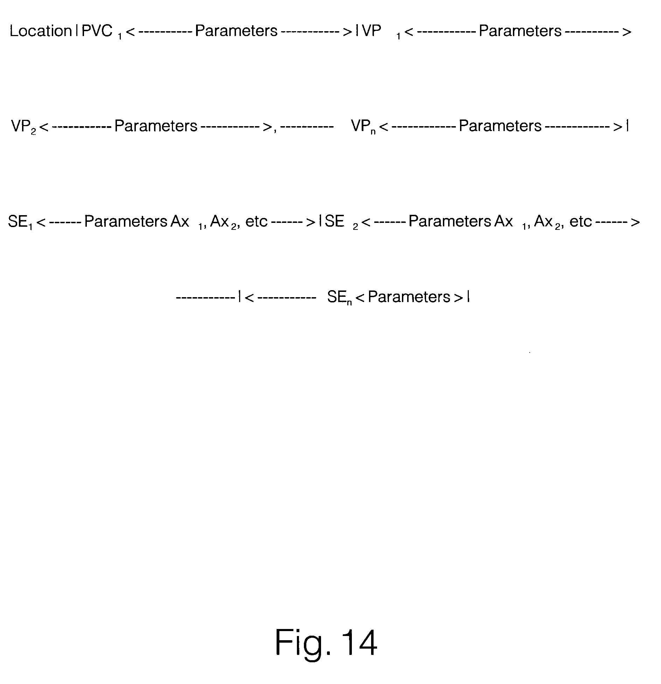

Referring to Fig. 14 herein, there is shown an example of a layout of performance data relating to a layer in a domain at one particular time as stored in the Management Information Base 504 or as input as live raw data to the processor 500. One such data entry for each permanent virtual circuit may be obtained typically every 15 minutes. For example for permanent virtual circuit PVC1, there are listed parameters at the service level across the whole of the network corresponding to network elements supporting that permanent virtual circuit, followed by for each virtual path VP1, VP2, .... VPn a set of virtual path parameters. For each switch element SE1, SE2, .... SEn, supporting the virtual paths and virtual circuit, there are listed a set of parameters in each case. For each individual component of the individual switches, for example Ax cards of a switch, there are listed parameters of the components, Ax1, Ax2 .... Axn. The performance data represented in the data entry of Fig. 14 represents an overall data performance over a 15 minute period for a set of switches, rather than a snap shot of operation at particular instant every 15 minutes. Thus, every 15 minutes a single data entry is generated giving the location of the switch, the permanent virtual circuits supported by that switch, and their corresponding parameters, the virtual paths supported by that switch and their corresponding parameters, information about neighboring switches and their corresponding parameters, and information on the individual constituent components of the switch, as well as information concerning individual components of neighboring switches.

Referring now to the problem solving engine 508, during an initialization phase, the problem solving engine has access to data from the management information bases, for each virtual path as follows:
- The maximum capacity of each virtual path
- Specified quality of service (QoS) for each link
- Bandwidth for each link

The problem solving engine is also updated periodically with the utilization of each permanent virtual circuit.

The problem solving engine operates to examine performance data which is outside predetermined limits and apply a set of predetermined case based reasoning statements to generate solutions for remedying problems in the network giving rise to the out of limit parameters. For example, where a parameter data suggests a high cell loss ratio, outside predetermined limits, the problem solving engine may read the type of quality of service corresponding to a virtual path, and if less than a pre-determined maximum quality of service suggest an increase in the quality of service. A problem of high cell loss ratio could be indicative of a customer attempting to overuse a transmission facility, the solution to which may be increasing the capacity of the transmission facility i.e. increasing the quality of service. The problem solving module comprises a list of case based reasoning statements of the form IF - THEN configured to take account of a selection of problem scenarios which may occur with a network. The problem solving module is configured to suggest solutions to problems occurring in each domain in which the network operates. The problem solving module generates a display comprising an identification of the problem, and a suggests a solution or solutions. The suggested solution or solutions are embedded in the case based reasoning statements comprising the problem solving module.

In the best mode herein, each of the visualization engine, correlation engine, and problem solving engine may operate autonomously on data received from the mining engine, and operate simultaneously on the same set of performance data. However, in other specific embodiments and processes according to the present invention, the problem solving engine, correlation engine, and visualization engine may operate inter-dependently upon each other. For example, if the correlation engine manages to find correlation between first and second parameters, the problem solving engine may recognize a problem with such a found correlation, and suggest a solution. At the same time, the visualization engine may receive information concerning the correlation from the correlation engine and determine an appropriate form of visual display for displaying the correlated data. Each of the visualization engine, correlation engine, and problem solving engine may have its own video monitor display, such that a human operator can visually monitor and diagnose problems within a network by watching the three separate video monitors.

There will now be described a further specific embodiment according to the present invention, which operates in a single domain, i.e. an ATM domain.

A prototype was developed using the functional programming language Gofer. Gofer's polymorphism was used to develop functions which permit correlation between arbitrary QoS parameters at arbitrary network layers (e.g. network, connection equipment) and possible interdependent behavior between those parameters (both inter-layer and intra-layer) to be detected. The prototype can be extended to mine additional network layers and performance parameters.

Techniques and ideas utilized in the measurement of the performance of ATM traffic networks, data mining, visualization techniques, pattern recognition and functional programming are combined in order to prototype a novel application. This prototype application provides users with readily understandable visualizations of performance events occurring in an ATM network, and suggest interdependent network layer/and or parameter behavior, possible problem areas in the network, and network reconfiguration. This prototype can be extended to cover the performance behavior in future network layers with additional performance parameters.

First, an application domain will be described, followed by the prototype and the three main functions constituting the application. The ease by which the prototype application may be extended to encompass additional layers and the measurement of additional performance parameters is also discussed.

The constant monitoring of the performance of an ATM traffic network is essential for the provider of such a network to ensure that the customer is receiving the quality of service (QoS) he has paid for be it the premium CBR (Constant Bit Rate) service required for video links or the VBR (Variable Bit Rate) often provided for audio telephone lines. It is also essential to the customer that he can independently determine the QoS that he is receiving, irrespective of his literacy with regard to the specific technicalities of the network.

In general, the QoS provided by a given network is determined by many different parameters, but we will focus on three main parameters:-
- Cell Loss Ratio (CLR)
- Cell Delay Variation (CDV)
- Cell Transmission Delay (CTD).

These three QoS parameters are important because between them they give an indication of the network performance at all network layers. Characteristics of cell loss ratio, cell delay variation and cell transfer delay are as described earlier in this document.

For the sake of this example, and to enable us to later show that the ideas can be extended to a network with more layers, it is assumed that an ATM network consists of three main layers:-
- Service
- Connection
- Equipment

The Service Layer is the highest layer and provides a 'virtual traffic traversable link' between two end points (the two end points being the source and destination of the traffic). An example of a Service Layer is a Permanent Virtual Circuit (PVC).

The Connection Layer is the middle layer and consists of many Virtual Paths (VPs), which are collections of Virtual Circuits (VCs). A number of VPs constitute a PVC.

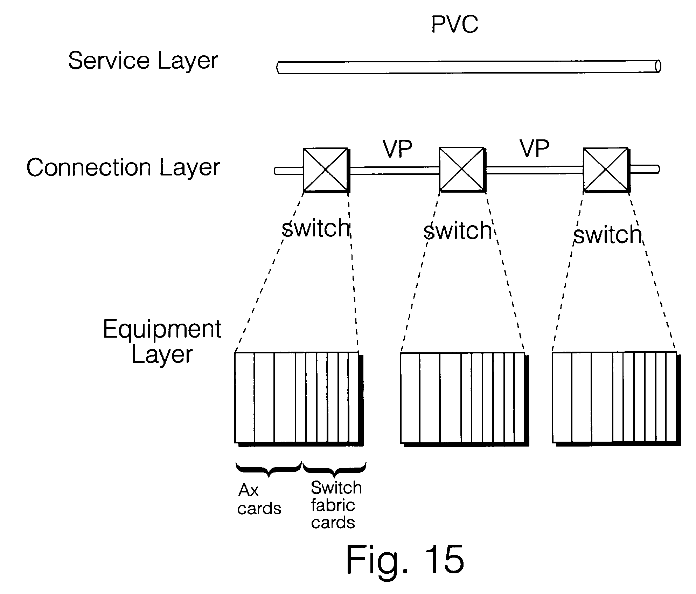

The Equipment Layer is the bottom layer, typically consisting of switches which contain switch control cards, called Ax cards and SF (switching fabric) cards which in turn have traffic queues associated with them. These queues have priorities assigned to them dependent upon the QoSs provided. A pictorial representation of this simplified model of an ATM network is given by Fig. 15 herein.

The three network performance parameters (CLR, CTD and CDV) are measured at each layer. At the lower layer, more detailed measurements can be made of further performance parameters. The reason for this is that, generally, when a network engineer is looking at the overall health of the network he is interested in a global picture. If he wishes to further investigate the picture he will require a more detailed performance picture, hence the ability to measure more performance parameters.

However, it should be pointed out that the more detailed performance parameters are available at the Service Layer by virtue of a summation of the performance parameters appertaining to the components constituting the Connection Layer. For example, performance parameter A may be made available at the Service Layer by the summation of performance parameter A at the Virtual Paths constituting the Permanent Virtual Circuit. The measurement of these performance parameters should enable the root cause of any network problems to be observed if the customer is aware that he is not receiving the service he requires.

None of the prior art data-mining tools yet developed have applied novel visualization techniques, pattern recognition and correlations, which all require the knowledge base of an expert.

### Visualization Techniques

Visualization Techniques, when used in conjunction with a suitable graphics engine, can readily display trends occurring in large sets of data, even to the technically illiterate user. Unfortunately, such techniques invariably require expert knowledge. Visualization techniques have yet to be routinely applied to ATM traffic networks (although this should change in the near future), with most visualization work focusing on the means to an end, i.e. on the tools that may be employed for such a task.^{20,21,22}

It seems intuitive that pattern recognition techniques could be coupled with the visualization of network trends to predict incidents in the network and correlations between events occurring in any of the network levels.

### Pattern Recognition

Pattern recognition enables trends to be determined by matching a pattern formed by data with a specific trend with patterns showing known trends. This is an established field with a unified approach to pattern matching. The approach taken during the process of pattern matching is the minimum 'error distance' between specific locations on the 'reference' (a pattern formed by data showing a 'known' trends) and 'unknown' graphs,^{23,24} (pattern formed by data of unknown trends). Other approaches use a cluster algorithm in addition to the 'error distance' method.²⁵

Other pattern matching techniques also include using two 2D images of the 'reference' and 'unknown' image and utilize a combination or 'error distance' from the two 2D images.²⁶ The 'error distance' between the Attributed Relational Graphs (I∼RGs) formed from the 'reference' and 'unknown' visualization of the performance data, ^{27,28} and the utilization of the 'error distance' between all attributes of the 'reference' and 'unknown' graphs²⁹ are further techniques also exploited.

Cleveland et al, ³⁰ discuss the graphical attributes that may be used in conjunction with the 'error distance' pattern matching approach and conclude that the position along a common scale is the best technique to use, whilst the graph area is the worst (i.e., area of pattern). However, they do point out that a combination of more than one graphical perception enhances the accuracy of pattern matching. They suggest 'error distance' and 'axis distance' as the combination of approaches to use in order to produce the best results, and this will be adopted, though the 'error distance' approach could be used on its own.

### Assimilation of Techniques

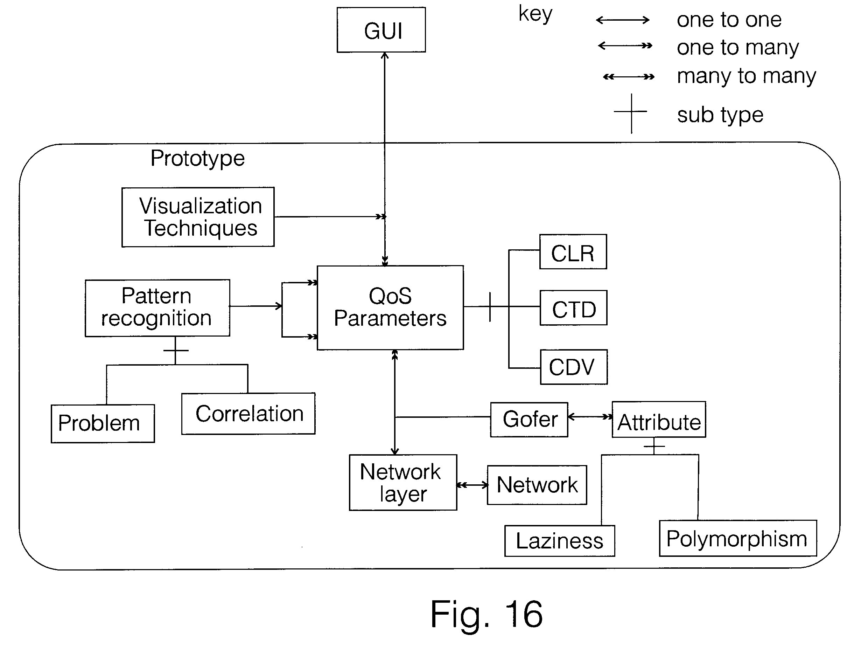

Fig. 16 shows how the ideas in the description of the application domain, and the three main functions of the prototype fit together and how they can be used for intelligent data mining.

The measurement of the ATM performance parameters produces vast amounts of data which require Data Mining and then Data Visualization to observe the behavior, and Pattern Recognition to recognize the trend contained in the data. These lead to suggestions on how to change the network configuration.

The performance of the re-configured network is then measured leading to vast amounts of data which require mining, and so on iteratively.

This is one example of how the Data Mining, Data Visualization and Pattern Matching techniques could be used sequentially in order to suggest network re-configuration from network performance data, other uses of the techniques could lead to a concurrent use of the Data Visualization and Pattern Matching techniques. In principle the visualization process is not essential in some aspects of the invention.

### Functional Programming

Functional Programming is applied to this problem because of its many attributes amongst which are polymorphism and lazy evaluation^{31,32}. The polymorphism enables the creation of functions which may be applied to any type of data which means that the functions may be applied to the parameter values of CLR, CDV and CTD even though they are of different types. The lazy evaluation enables a continuous data stream to be mined for specific parameters e.g. the continuous data stream may be mined for all CLR measurements at the Connection Layer.

### Prototype Application

Fig. 16 depicts a Shlaer mellor³³ information model which describes the main objects in the prototype. The figure shows that a network may have many layers at which many performance parameters may be measured. The performance parameters for this exercise fall into the three categories of CLR, CTD and CDV.

These parameters may be visualized by many visualization techniques, and pattern recognition techniques may be applied to these parameters in order to suggest network problems and correlatory behavior.

Attention is drawn to the objects, Visualization Techniques and the two sub-types of Pattern Recognition, Problem and Correlation, which become the function paragraph, parProb, and correlPar in the prototype.

It is important to note that if the application does not contain a GUI, it could produce textual suggestions of which visualization techniques to use, and which axes, where applicable, to display the various parameters/and or layer information in order to observe any latent trends.

The remainder of this section describes the three main functions called super general functions which perform the tasks of:-
- Determining any correlation between behavior of parameters at the various network layers (CorrelPar).
- Suggesting which visualization techniques to use to observe the trends occurring in the data (parGraph).
- Suggesting areas where there may be problems (either parameter and/or layer) and suggestions of network configuration changes (parProb).

### ParGraph

The polymorphic function of parGraph determines which is the best method of displaying performance information, depending on the value of a given function. The value of the function depends upon how much lower, or higher, all performance parameters, on all layers, are relative to their allowable values.

### CorrelPar

This is a polymorphic function enabling correlation between performance behavior to be suggested for a chosen parameter(s). For a given parameter type, correlPar determines which layer show correlation between behavior. It performs this task by comparing the trend in each performance parameter at each layer over time, and then by determining whether the same trend is shown by other parameters and/or layers.

### ParProb

parProb is another polymorphic function, and for a given parameter type, parphob determines which layers show possible problem behavior. The function determines the problem behavior by comparing the performance parameters at all layers with their allowable values.

An example follows:
(For simplicity sake the allowable values of all parameters at all layers have been set to one.)
- The data stream comprising the following parameters is measured by the network and fed into the prototype.
- Service Layer - CLR = 2, CDV = 0, CTD = 0, t = 0, CLR = 3, CDV = 0, CTD = 0, t= 1, CLR = 4, CDV = 0, CTD = 0, t = 2
- Connection Layer - CLR = 2, CDV = 0, CTD = 0, t = 0, CRL = 3, CDV = 0, CTD = 0, t = 1, CLR = 4, CDV = 0, CTD = 0, t = 2
- Equipment Layer - CLR = 2, CDV = 0, CTD = 0, t = 0, CLR = 3, CDV = 0, CTD = 0, t = 1, CLR = 4, CDV = 0, CTD = 0, t = 2
- parGraph would suggest that the best method to visualize all information would be a 3D graph with the data relating to each layer displayed on the x, y and z axes, and that the data relating to each individual layer could be optimally visualized using overlaid 2D plots of parameter versus time. These suggestions are based upon the fact that all parameters except CLR are 0, and that CLR at all network layers is greater than the allowable value.
- correlPar would suggest there was a possible correlation between CLR behavior at all three network layers because there is a corresponding increase in CLR value with increase in time for all layers.
- parProb would suggest that there was a problem with the CLR parameter at all layers over all measurement time because the CLR parameter is greater than its allowable value at layers at all measurement time. It would suggest reconfiguration by increasing the QoS allocated to the user and thus increasing the CLR threshold.

It should be noted that if new layers of performance parameters are identified, they can be simply added to the Abstract Data Types and existing higher-order polymorphic functions may be specialized accordingly. This is because the super general functions have the ability to process any parameter at any layer in anyway.

### Conclusions

It has been demonstrated that the assimilation of the techniques and ideas utilized in the measurement of performance of ATM traffic networks, data mining, visualization techniques, pattern recognition and functional programming produces an original prototype. The prototype also provides operators with readily understandable visualizations of performance events occurring in an ATM network, with correlations for interdependent behavior, and problem areas being suggested. The prototype could be extended to include the use of a graphics engine.

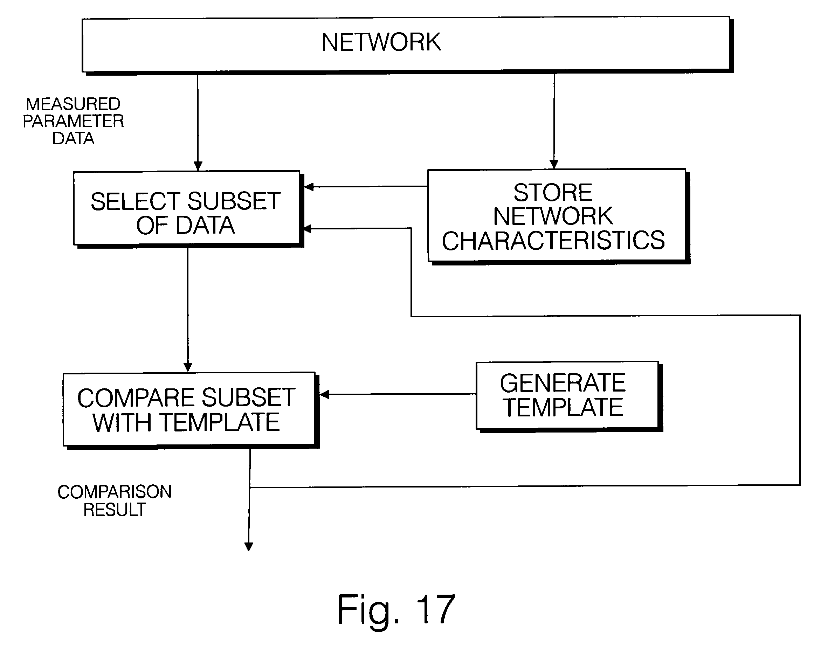

Fig. 17 shows the data mining is in schematic form, including the steps of selecting a subset of a data and comparing it with a template. The selection is adaptive, depending on network characteristics and comparison result.

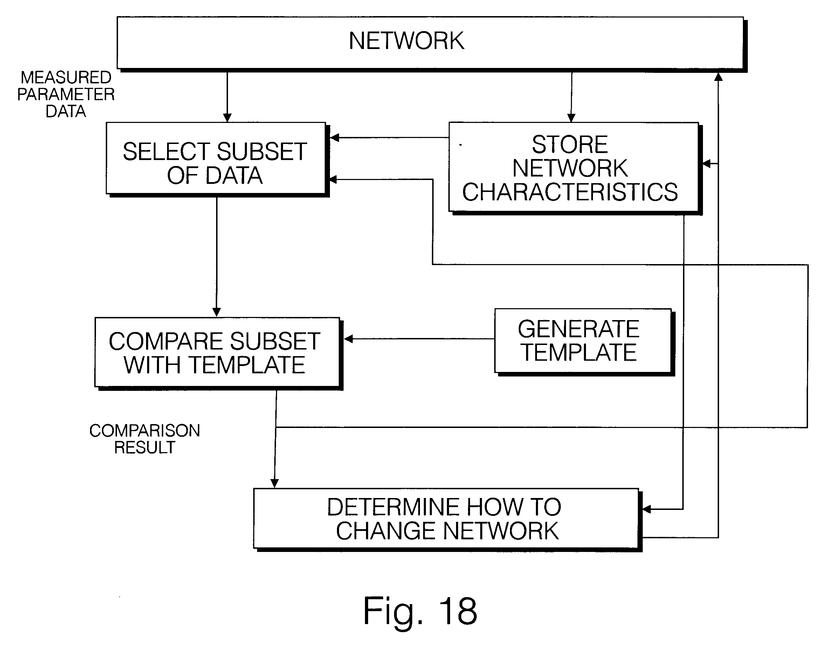

Fig. 18 shows the additional step of determining how to change the network, to reconfigure it as a result of comparison. The stored network characteristics may be altered directly or indirectly. The characteristics may be used in determining how to change the network. The changes could be carried out automatically or merely suggested to an operator. Optionally, the template could be adapted according to how the network is to be changed.

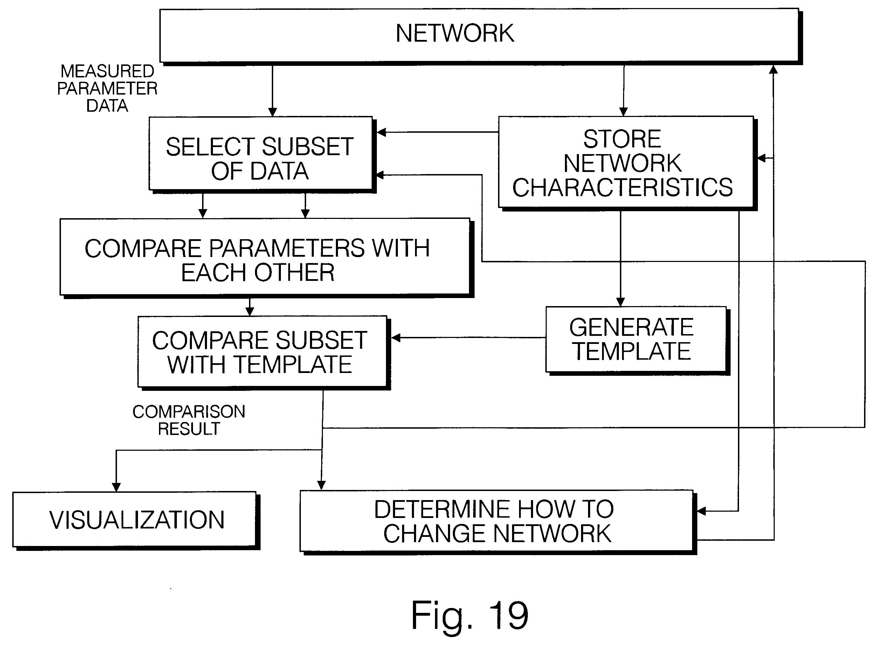

Fig. 19 shows how the template generation may be influenced by the stored characteristics. Also, the comparison of correlation with the template may follow a comparison or correlation between parameters. Clearly, a different template will be used in this instance. The visualization for the operator is shown here. This may be adaptive, to highlight interesting trends or derivations.

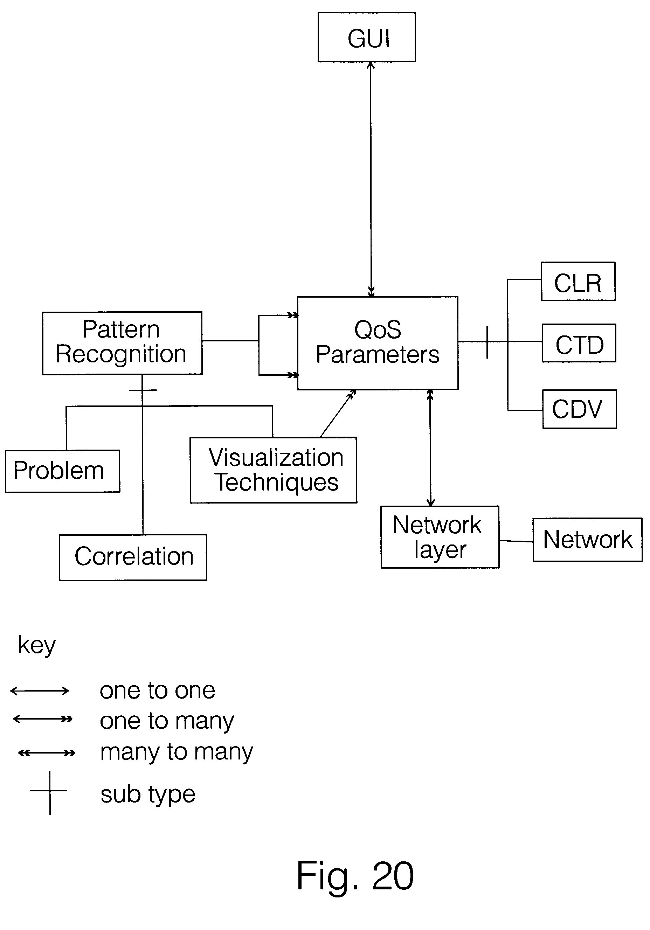

Referring to Fig. 20 herein, there is illustrated a further information model corresponding to a further specific embodiment to the present invention.

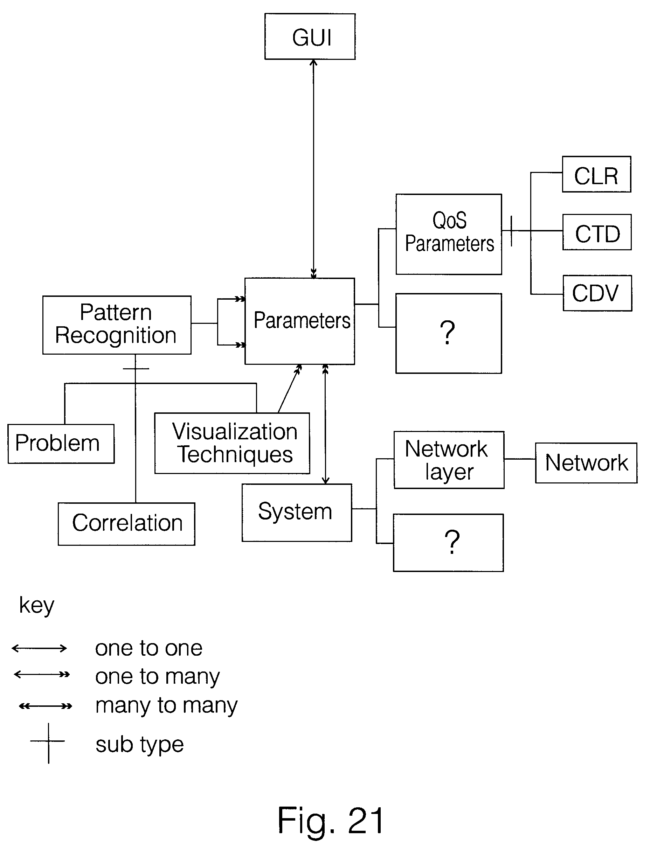

Referring to Fig. 21 herein, there is shown yet another information model relating to yet another specific embodiment according to present invention.

### References

[1] Kershav S. V., "Theoretical Approach to Flow-control", Computer Comm, Rev 21(4), Sept '91, pp 3-
[2] Kung H. T. & Chapman A., "The FCVC Proposal for ATM Networks", Proc 1993 Conf on Network Protocols, San Fransisco, USA, 19-22 Oct '93, pp 116-27
[3] Gerla M. & Kleinwrock L., "Flow Control: A Comparative Study", IEE Trans Comm Flow Control 28(4), Apr '80, pp 553-574
[4] Kung H. T., Blackwell T., & Chapman A., "Credit Update Protocol for Flow-Controlled ATM Networks", Sig Comm '94, Sept-Oct '94, pp 101-104
[5] Habib I. W. & Sawadi T. N., "Multimedia Traffic Characteristics in Broadband Networks", IEEE Comm, Mg 31(7), June 1992, pp 48-54
[6] Volodine T. & Subrarbere G. S., "Network Management and Traffic Analysis for CICNET", IEEE Network Manage 5(5), Sept 91, pp 41-50
[7] Clapp G. H., "LAN Interconnects Across SMPS", IEEE Network Manag 5(5), p 25-32
[8] Marshall W. T. & Managa S. P., "Statistics of Mixed Data Traffic in a LAN", ITC 11, '85 Pt 2, Kyoto, 4-11 Sept '85, pp 569-575
[9] Paxon V. & Floyd S., "WAN Traffic: The Failure of Poison Modeling", SIGCOMM '94, Sept-Oct '94, pp 257-268
[10] Garrison R., Spector A. & De Groot P. C., "The BT Traffic Management System", Brit Telecom Eng 10(3), Oct '92, pp 222-229
[11] Protegeros A. & Ball E., "Traffic Analyzer & Generator, Traffic Capture, Generation, Statistics & Network Integrity", Compt Comm 13(8), '90 pp 469-477
[12] Kajiyana Y. & Nobujuki T., "A Multiplexing Method of Multimedia Signals in ASTM Networks", Electr Comm Jap Ptl Comm 75(7), Jul '92, pp 22-23
[13] Khabaza T. & Shearer C., "Data Mining with Clementine", IEE Colloq Data Mining, Feb '95, pp 1-5
[14] Scarfe R. T. & Shortland R. J., "Data Mining Applications in BT", IEE Colloq Data Mining, Feb '95, pp 5-1 - 5-4
[15] Bryant C. H., Adam A. E., Conroy G. V., Taylor D. R. & Rowe R. C., "Discovering Knowledge Hidden in a Chemical Database using Commercially Available Data Mining Tool", IEE Colloq data Mining, Feb '95, pp 6-1 - 6-5
[16] Magill I. C., Tan M. G., Annand S. S., Bell D. A. & Hughes J. G, "Data Base Mining in the Northern Ireland Housing Executive", IEE Colloq Data Mining, Feb '95, pp 8-1 - 8-4
[17] Mitchell F., Sleeman D. H. & Milne R., "How to Do Knowledge Acquisition Without Completing Annoying Your Expert", IEE Colloq Data Mining, Feb ' 95, pp2-1 - 2-10
[18] Walburn D. H. & Powner E. T., "Discovering Knowledge from Automatically Gathered Production Machine Data", IEE Colloq Data Mining, 'Feb 95, pp 4-1 - 4-5
[19] Austin G. D. & Tomasson H. B., "Unlocking the Value of Performance Monitoring Data", Telephony, Nov 14^{th} 1994, pp 48-52
[20] Angstenberger J., Lieven K. & Weber R., 'Intelligent Methods for Data Mining', UNICOM Seminar on Data Mining, p37 - 67, 11-12 July 1995, London
[21] Shearer C., 'User Driven Data Mining Applications', UNICOM Seminar on Data Mining, p 70 - 74, 11-12 July 1995, London
[22] Bryant C. H., Adam A.E., Conroy G.V., Taylor D.R. & Power R. C., 'DataMariner', UNICOM Seminar on Data Mining, p76 - 90, 11-12 July 1995, London
[23] Totton K. & Scarfe R., 'Data Mining Applications in BT', UNICOM Seminar on Data Mining, p94 - 112, 11-12 July 1995, London
[24] Tan M.G, Anand S.S., Magill I.C., Bell D.A. & Hughes J.G., 'The Mining Kernel System', UNICOM Seminar on Data Mining, p113 - 133, 11-12 July 1995, London
[25] Nelson C., 'Using Knowledge-Guided Data Mining to Predict Your Customers' Needs', UNICOM Seminar on Data Mining, p135-144, 11-12 July 1995, London
[26] Leon M. & Valamudi p., 'Data Warehouse Vendors do Data Mining', Info world vo. 18, no 24, p38 - 42, June 1996
[27] ATM Standards available from International Telecommunications Union, Sales & Marketing, Place des Nations, CH-1211 Geneva 20 Switzerland, sales@itu.ch

## Claims

1. A method of monitoring performance parameter data of a communications network comprising a plurality of network elements generating performance signals describing performance parameter data of said network, said method comprising the steps of:
obtaining said performance parameter data (700) of the network by collecting said performance signals from said plurality of network elements;
examining said performance parameter data (701, 702, 703) by comparing said performance parameter data with predetermined performance data limits according to a set of predetermined rules; and
at least one step selected from the following:
identifying patterns (704) in said performance parameter data;
generating reconfiguration data (704) describing reconfiguration of said network for modifying operation of said network.

2. A method as claimed in claim 1, further comprising the step of visualizing said performance parameter data by selecting a display mode for displaying said performance parameter data on a visual display device.

3. A method as claimed in claim 1 or 2, wherein said step of identifying patterns in said performance parameter data comprises for each parameter, comparing a said performance parameter data corresponding to one said network element with at least one performance parameter data corresponding to another said network element.

4. A method as claimed in claimed in any one of the preceding claims, wherein said step of identifying patterns in said performance parameter data comprises:
comparing a performance parameter data corresponding to a connection of the network with a performance parameter data corresponding to at least one other said connection of the network.

5. A method as claimed in any one of the preceding claims, wherein said step of obtaining performance parameter data comprises:
collecting performance signals describing one said performance parameter from each of a plurality of said network elements.

6. A method as claimed in any one of the preceding claims, wherein said step of obtaining performance parameter data comprises:
collecting from each said network element a plurality of performance signals describing a plurality of performance parameters.

7. A method as claimed in any one of the preceding claims, wherein said step of visualizing said performance parameter data comprises:
comparing values of said performance parameter data with a set of predetermined performance parameter data limits; and
depending upon a result of said comparison, selecting a said display mode from a predetermined set of said display modes.

8. A method as claimed in claim 7, wherein said set of predetermined display modes comprises:
a two dimensional graph display mode;
a two dimensional Star plot display mode;
a three dimensional graph display mode:

9. A method as claimed in any one of the preceding claims, wherein said step of generating reconfiguration data comprises generating at least one help message identifying actions for modifying performance of said network.

10. A method as claimed in any one of the preceding claims, wherein said step of generating reconfiguration data comprises the steps of:
storing a set of help messages, each referenced to a set of predetermined performance parameter values;
comparing said obtained performance parameter data with said set of predetermined performance parameter values;
matching said obtained performance parameter data to a said set of predetermined performance parameter values; and
selecting a said help statement corresponding to a said matched set of predetermined performance parameter values.

11. A method as claimed in any one of the preceding claims, comprising generating a visual display for displaying at least one of the following:
a result of said step of visualizing said performance parameter data;
at least one identified pattern in said performance parameter data;
a said reconfiguration data.

12. A monitoring apparatus for monitoring and diagnosing performance of a network comprising a plurality of network elements, said network elements generating performance signals describing performance parameters data of said network elements; said apparatus characterized by comprising:
examination means (505) for monitoring said performance parameter data;
visualization means (506) operating to format said performance parameter data into a form suitable for display;
pattern identification means (507) for identifying data patterns in said performance parameter data; and
reconfiguration data generating means (508) for generating data describing reconfiguration of said network for modifying operation of said network.

13. A method of monitoring a communications network comprising a plurality of network elements, each said network element capable of generating performance signals describing operation of said network, characterized in that:
a first set of said network elements generate a first set of performance signals describing a first domain of operation of said network;
a second set of network elements generate a second set of performance signals describing a second domain of operation of said network; and
said method comprises the step of monitoring said first set of performance signals and said second set of performance signals.

14. A method as claimed in claim 13, further comprising the step of comparing said first set of performance signals with said second set of performance signals.

15. A method of monitoring a communications network comprising a plurality of network elements, each said network element capable of generating performance signals describing performance parameters of said network, characterized in that said network operates on a plurality of different layers of operation, said method comprising the steps of:
examining said performance signals to determine operation of services supported by said network;
examining said performance signals to determine operation of individual connections across said network;
examining said performance signals to determine operation of individual node devices of said network; and;
examining said performance signals to determine operation of individual components of said node devices.

16. A method as claimed in claim 15, comprising the step of:
if any said performance signals are found outside predetermined limits, performing correlations of said performance signals for identifying patterns in said corresponding performance parameters.

17. A method as claimed in claim 15 or 16, comprising the step of:
if any said performance signals are found outside predetermined limits, identifying a problem condition from said signals.

18. A method as claimed in claim 15, wherein said performance parameters comprise quality of service parameters.

19. A method of measuring the performance of a communication network on the basis of data representing a plurality of network performance parameters, the method characterized by comprising the steps of:
data mining by selecting a subset of the parameter data, the selecting being made on the basis of first predetermined criteria;
comparing the selected subset with a template;
adapting the first criteria on the basis of the comparison result, and on the basis of stored knowledge of the characteristics of the network being measured.

20. The method of claim 19, further comprising the step of determining how to change the network on the basis of the result of the comparison.

21. The method of claim 20, wherein the change is determined on the basis of stored knowledge of the network characteristics.

22. The method of any one of claims 19 to 21, further comprising the step of visualizing the selected subset of the parameter data for an operator, wherein the visualization method is dependent on the comparison result.

23. The method of any one of claims 19 to 22, wherein the template is determined on the basis of stored knowledge of the network characteristics.

24. The method of any one of claims 19 to 23, wherein the network is layered and the network performance parameters comprise parameters measured at more than one layer.

25. The method of any one of claims 19 to 24, wherein the subset comprises data representing a plurality of parameters, and the comparison step comprises the step of comparing data of one parameter with that of at least one other parameter and comparing the result with the template.

26. The method of any one of claims 19 to 25, wherein the comparison between parameters is between parameters at different layers in the network.

27. The method of any one of claims 19 to 26, wherein the comparison involves pattern recognition.

28. The method of any one of claims 19 to 27, wherein the selection step is carried out on live data.

29. The method of any one of claims 19 to 28, wherein the network is a cell based communications network, and the parameters comprise parameters related to quality of service to users of the network.

30. A method of reconfiguring a network on the basis of data representing a plurality of network performance parameters, the method characterized by comprising the steps of data mining by selecting a subset of the parameter data, the selection being made on the basis of first predetermined criteria;
comparing the selected subset with a template;
adapting the first criteria on the basis of the comparison result; and
reconfiguring the network on the basis of the comparison result.

31. A system for carrying out the method of claim 19.

32. A system for carrying out the method of claim 19, using a functional programming language.

33. A system for analyzing parameters in data from a network having at least one layer, characterized by using a data mining tool implemented in a functional programming language, the tool comprising:
means for selecting a subset of the data; and
means for comparing parameters in the subset; wherein
the system is scaleable in terms of how many parameters can be compared and from which layers, or in terms of adding other functions to be applied to the parameters.

34. A system for analyzing parameters in data from a network, characterized by using a data mining tool implemented in a functional programming language, the tool comprising:
means for selecting a subset of the data; and
means for comparing parameters in the subset; wherein
the comparison function is a polymorphic function.

35. A system for analyzing parameters in data from a network, characterized by using a data mining tool implemented in a functional programming language, the tool comprising:
means for selecting a subset of the data; and
means for comparing parameters in a subset; wherein
the system is arranged to analyze live data as it is output by the network.
